# EUROPEAN PATENT SPECIFICATION

(11) **EP 4 385 806 B1**
(45) Date of publication and mention of the grant of the patent: **09.09.2026**
(21) Application number: 22855527.2
(22) Date of filing: 12.08.2022
(51) Int. Cl.: B60L 53/30, B60L 53/16, B60L 53/18, H01R 31/06

(54) **INTEGRATED CHARGING DEVICE FOR ELECTRIC VEHICLE**
INTEGRIERTE LADEVORRICHTUNG FÜR ELEKTROFAHRZEUG
DISPOSITIF DE CHARGE INTÉGRÉ POUR VÉHICULE ÉLECTRIQUE

(30) Priority: 13.08.2021 CN 202110932833; 13.08.2021 CN 202121898943 U
(43) Date of publication of application: 19.06.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/112064
(87) International publication number: WO 2023/016547

(56) References cited:
- EP-A2- 2 360 050
- CN-A- 102 163 863
- CN-A- 107 492 773
- CN-A- 109 149 717
- CN-A- 109 301 642
- CN-A- 109 301 642
- CN-A- 111 688 514
- CN-A- 111 688 514
- CN-A- 113 442 766
- CN-U- 213 243 590
- CN-U- 215 361 004
- JP-A- 2020 068 618
- US-A- 4 985 789
- US-A1- 2020 047 637

## Description

### RELATED APPLICATION

The present disclosure claims priorities to Chinese Invention Patent Application No. 202110932833.1 filed on August 13, 2021 and Chinese Utility Model Patent Application No. 202121898943.2 filed on August 13, 2021.

### TECHNICAL FIELD

The present disclosure relates to the technical field of charging of electric vehicles, and particularly to an integrated charging device for an electric vehicle.

### BACKGROUND

New energy automobiles have been increasingly popular, and owners use charging guns of mode 2 to charge their automobiles in emergencies. Mode 2 means that when an electric automobile is connected to an AC power source, a plug and a socket meeting the requirements of Chinese national standards GB2099.1 and GB1002 are used on a power source side; a phase line, a neutral line and a grounding protection conductor are used on the power source side; and an in-cable control is adopted during charging connection. When being at home, the owners usually uses charging piles with high charging power to charge the new energy automobiles. To this end, customers need to buy these two kinds of products to charge the new energy automobiles, in which the charging gun of mode 2 is portable and can be used as an emergency backup charging device, and the charging pile (e.g., wallbox charging pile) has the advantage of fast charging while being unportable. Generally, the owners will buy both of these two kinds of charging devices to meet different needs, but the purchase cost is high. Therefore, there is an urgent need for a new solution to solve the above problem in the prior art. Conventional charging devices are known from the prior art, for example from CN107492773A, CN111688514A, and EP2360050A2.

### SUMMARY

Embodiments of the present disclosure provide an integrated charging device for an electric vehicle, so as to solve the problem of high purchase costs for vehicle owners caused by separately purchasing a charging gun of mode 2 and a wall-mounted charging pile. The invention is set out in the appended set of claims. Any references to inventions or embodiments not falling within the scope of the independent claims are to be interpreted as examples useful for understanding the invention.

The embodiments of the present disclosure provide an integrated charging device for an electric vehicle, including a high-power charging adapter, a charging gun head, a control box and a power supplying plug. The high-power charging adapter, the control box and the charging gun head are detachably and electrically connected in sequence to form a wall-mounted charging pile. The charging gun head, the control box and the power supplying plug are detachably and electrically connected in sequence to form a charging gun of mode 2.

The characteristics and advantages of the integrated charging device for an electric vehicle of the embodiments of the present disclosure include:
1. The charging device of the present disclosure integrates the wall-mounted charging pile and the charging gun of mode 2, so that users can assemble the components of the charging device as required to obtain the wall-mounted charging pile or the charging gun of mode 2, thereby realizing free switching under different use conditions, which facilitates the use and saves the purchase cost.
2. The control box in the present disclosure can control the charging of both the charging pile and the charging gun, thereby improving the safety and reliability of the charging device.

### BRIEF DESCRIPTION OF DRAWINGS

The drawings, which are included to provide further understanding of the embodiments of the present disclosure and constitute a part of the specification, illustrate the embodiments of the present disclosure, and explain the principle of the present disclosure together with the description. Obviously, the drawings described below involve only some embodiments of this disclosure. For those of ordinary skill in the art, other drawings can be derived from these drawings without any inventive efforts. In the drawings:
FIG. 1 illustrates a schematic structural diagram of a high-power charging adapter according to an embodiment of the present disclosure;
FIG. 2 illustrates a schematic structural diagram of a charging gun head according to an embodiment of the present disclosure;
FIG. 3 illustrates a schematic structural diagram of a control box according to an embodiment of the present disclosure;
FIG. 4 illustrates a schematic structural diagram of a power supplying plug according to an embodiment of the present disclosure;
FIG. 5 illustrates a schematic structural diagram of a wall-mounted charging pile according to an embodiment of the present disclosure; and
FIG. 6 illustrates a schematic structural diagram of a charging gun of mode 2 according to an embodiment of the present disclosure.

### DETAILED DESCRIPTION OF EMBODIMENTS

For a clearer understanding of the objectives, technical features and effects of the embodiments of the present disclosure, specific embodiments will now be described with reference to the drawings. The described embodiments are intended only to schematically illustrate and explain this invention and do not limit the scope of the present disclosure.

In the description of the present disclosure, unless otherwise specified, the term 'connection' should be should be interpreted in a broad sense, such as a fixed connection, a detachable connection, a direct connection, or an indirect connection through an intermediate medium, and those skilled in the art can understand the specific meanings of the above terms in this patent according to specific circumstances. The 'high power' mentioned herein refers to a power greater than 1 kw, and the commonly used high power are 3.6 kw, 7.2 kw, 11 kw, 22 kw, etc.

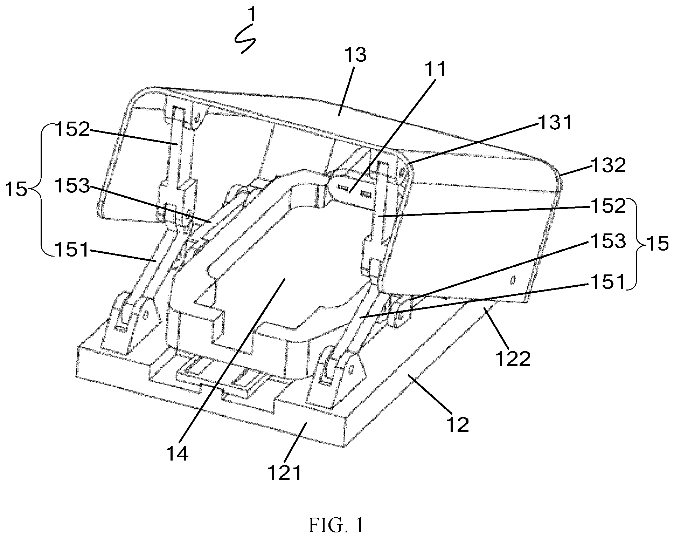

As illustrated in FIGS. 1 to 6, embodiments of the present disclosure provide an integrated charging device for an electric vehicle, including a high-power charging adapter 1, a charging gun head 2, a control box 3 (i.e. an in-cable control and protection device) and a power supplying plug 4. The high-power charging adapter 1, the control box 3 and the charging gun head 2 are detachably and electrically connected in sequence to form a wall-mounted charging pile 100. The charging gun head 2, the control box 3 and the power supplying plug 4 are detachably and electrically connected in sequence to form a charging gun of mode 2.

The charging device of the present disclosure integrates the wall-mounted charging pile and the charging gun of mode 2, so that users can assemble the components of the charging device as required to obtain the wall-mounted charging pile or the charging gun of mode 2, thereby realizing free switching under different use conditions, which facilitates the use and saves the purchase cost.

According to the invention, the control box 3 includes a first control module configured to control the charging of the wall-mounted charging pile 100 and a second control module configured to control the charging of the charging gun 200 of mode 2.

In this embodiment, the principle of a control pilot circuit of the first control module is illustrated in a schematic diagram of a control pilot circuit of a charging mode 3 or charging mode 4 in the PRC national standard GB/T18487.1, and the principle of a control pilot circuit of the second control module is illustrated in a schematic diagram of a control pilot circuit of a charging mode 2 in the PRC national standard GB/T18487.1.

In an example not covered by the claims, activations of the first control module and the second control module are controlled by a manual switch or an automatic switch, i.e., the control box further includes a first switch through which the first control module is turned on (activated) or off, and a second switch through which the second control module is turned on (activated) or off.

In this embodiment, when the charging device is to be used as the wall-mounted charging pile 100, the first switch is turned on and the second switch is turned off to activate the first control module and deactivate the second control module. When the charging device is to be used as the charging gun 200 of mode 2, the second switch is turned on and the first switch is turned off to activate the second control module and deactivate the first control module.

According to the invention, activations of the first control module and the second control module are automatically controlled by a switching device in the control box, i.e., the control box further includes a switching device, which is electrically connected to the first control module and the second control module respectively. The switching device is configured to identify power parameters such as current, voltage and frequency, and activate the first control module or the second control module according to the identified power parameters, thereby realizing automatic control and switching.

Specifically, the switching device is a circuit board storing control program codes. The circuit board is configured to identify parameters of a power grid end through the hardware of the circuit board, and invoke corresponding control program codes according to the parameters, thereby realizing logic switching.

Further, the switching device includes an identification module configured to identify power parameters of the power grid end, and a switching module configured to control the first control module or the second control module to be electrically connected to the power grid end according to the power parameters identified by the identification module.

According to the invention, the control box 3 automatically identifies the power parameters such as rated voltage, current and frequency at the power grid end, and invokes the first control module or the second control module according to an identification result.

For example, when the control box 3 is connected to the high-power charging adapter 1 and the charging gun head 2, the identification module of the control box 3 identifies the power parameters (called first power parameters) such as voltage, current and frequency of a corresponding power grid end (called a first power grid end), and the switching module invokes the first control module according to the first power parameters to enable the first control module to be conducted with the first power grid end, so as to control the charging of the wall-mounted charging pile 100 through the first control module. When the control box 3 is connected to the power supplying plug 4 and the charging gun head 2, the identification module of the control box 3 identifies the power parameters (called second power parameters) such as voltage, current and frequency of a corresponding power grid end (called a second power grid end), and the switching module invokes the second control module according to the second power parameters to enable the second control module to be conducted with the first power grid end, so as to control the charging of the mode two charging gun 200 through the second control module.

The above power parameters such as voltage, current and frequency may be set as required with reference to the PRC national standard GB/T 156, the European standard IEC60038 and its subsidiary standards, or the standards of other countries, and the specific values are not limited herein.

Therefore, the control box 3 in the embodiments can control the charging of both the wall-mounted charging pile 100 and the charging gun 200 of mode 2, and can automatically invoke the corresponding control module by identifying the power parameters such as rated voltage, current and frequency at the power grid end, which is safe and convenient to use.

As illustrated in FIGS. 1 to 6, in some embodiments, the high-power charging adapter 1 includes a first male end 11, the control box 3 includes a utility female end 31 and a gun connecting female end 32, the charging gun head 2 includes a second male end 21, and the power supplying plug 4 includes a third male end 41. The control box 3 is plugged with the second male end 21 through the gun connecting female end 32, and plugged with the first male end 11 or the third male end 41 through the utility female end 31.

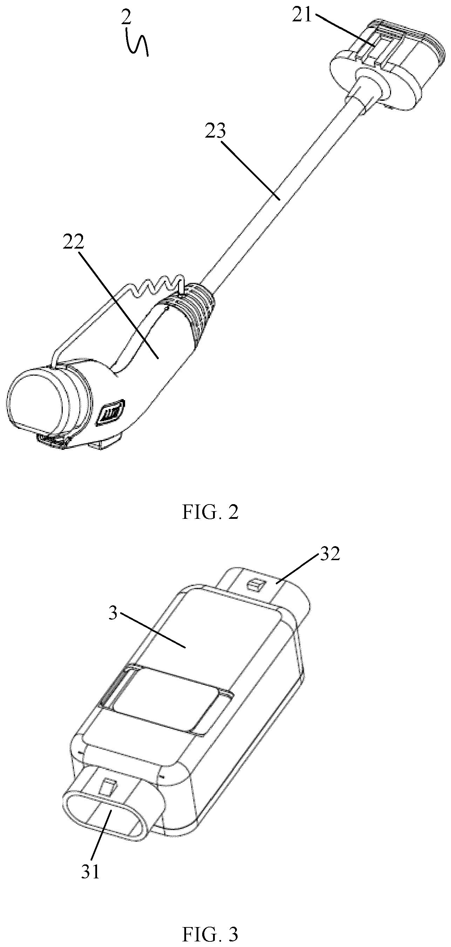

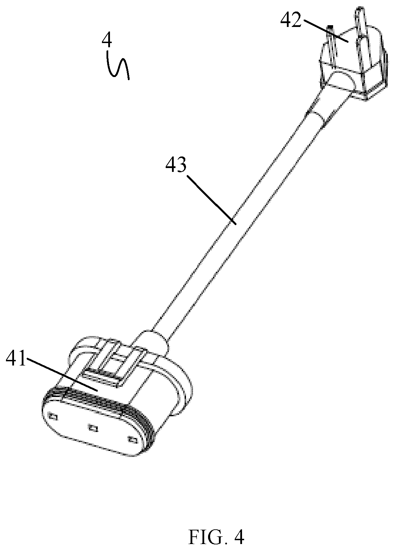

As illustrated in FIGS. 2 and 4, further, the charging gun head 2 includes a gun head body 22 and a first cable 23, and the gun head body 22, the first cable 23 and the second male end 21 are fixedly connected in sequence. The gun head body 22 can be plugged into an electric vehicle. The power supplying plug 4 includes a power source plug 42 and a second cable 43, and the power source plug 42, the second cable 43 and the third male end 41 are fixedly connected in sequence. The power source plug 42 can be plugged into a power supplying socket.

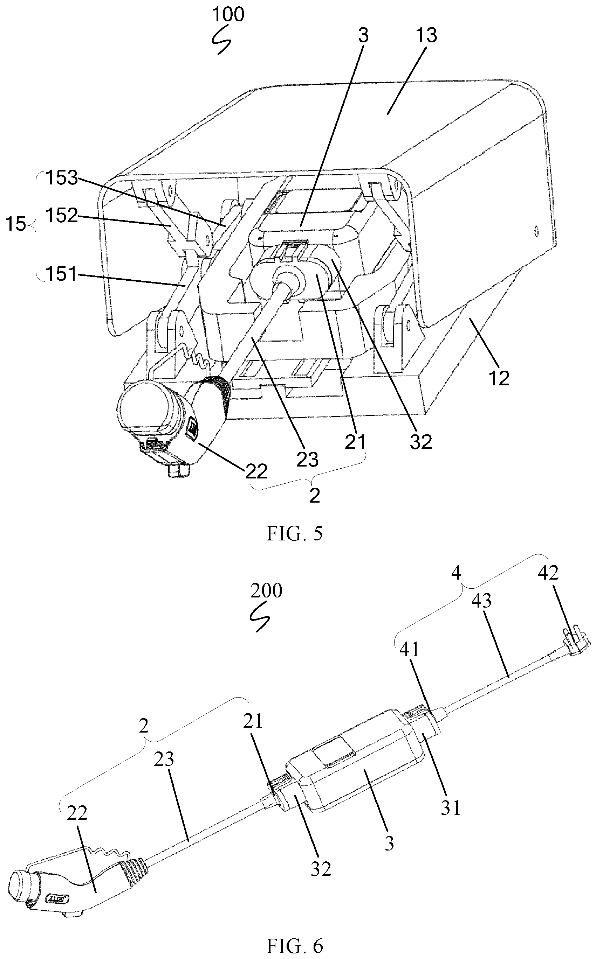

As illustrated in FIG. 5, when there is a need to use a wall-mounted charging pile 100 for charging, the gun connecting female end 32 of the control box 3 is plugged with the second male end 21 of the charging gun head 2, and the utility female end 31 of the control box 3 is plugged with the first male end 11 of the high-power charging adapter 1, to obtain the wall-mounted charging pile 100. Next, the gun head body 22 of the charging gun head 2 is plugged with an electric vehicle to perform charging.

As illustrated in FIG. 6, when there is a need to use a charging gun 200 of mode 2 for charging, the gun connecting female end 32 of the control box 3 is plugged with the second male end 21 of the charging gun head 2, and the utility female end 31 of the control box 3 is plugged with the third male end 41 of the charging gun 200 of mode 2, to obtain the charging gun 200 of mode 2. Next, the gun head body 22 of the charging gun head 2 is plugged with an electric vehicle, and the power source plug 42 of the power supplying plug 4 is plugged with a power supplying socket, to perform charging.

As illustrated in FIG. 5, in some embodiments, the high-power charging adapter 1 includes a connector body 12 and an upper cover 13. The connector body 12 is provided with an accommodating groove 14 for accommodating the control box 3, and the first male end 11 is fixed on the connector body 12 and adjacent to the accommodating groove 14. When the utility female end 31 of the control box 3 is plugged with the first male end 11, the control box 3 is located just in the accommodating groove 14, and the upper cover 13 is capable of shielding the accommodating groove 14 by covering over the connector body 12.

As illustrated in FIGS. 1 and 5, further, the connector body 12 and the upper cover 13 are rotatably connected to each other, so that the connector body 12 and the upper cover 13 can be relatively opened or closed by relative rotation, which is convenient to operate.

As illustrated in FIGS. 1 and 5, further, the connector body 12 includes a first front end 121 and a first rear end 122, the upper cover 13 includes a second front end 131 and a second rear end 132, the second rear end 132 of the upper cover 13 is rotatably connected to the first rear end 122 of the connector body 12, and the second front end 131 of the upper cover 13 is rotatably connected to the first front end 121 of the connector body 12 through a power-assisting hinge. By rotating the power-assisting hinge, the second front end 131 of the upper cover 13 and the first front end 121 of the connector body 12 are moved towards or away from each other, so that the connector body 12 and the upper cover 13 are relatively opened or closed. When the utility female end 31 of the control box 3 is plugged with the first male end 11 by a plugging force, the plugging force is transmitted to the power-assisting hinge via the connector body 12 to drive the power-assisting hinge to be rotated and cause the connector body 12 to be moved towards the upper cover 13, so that the connector body 12 and the upper cover 13 are relatively closed. Therefore, by disposing the power-assisting hinge in this solution, the operation of plugging the control box 3 to the first male end 11 of the connector body 12 also simultaneously causes the connector body 12 and the upper cover 13 to be relatively closed, which is convenient to operate, thereby providing great convince to users.

As illustrated in FIGS. 1 and 5, specifically, for example, the power-assisting hinge includes two groups of hinge structures 15, which are located at two opposite sides of the receiving groove 14, respectively. Each group of hinge structure 15 includes a first rotating rod 151 and a second rotating rod 152, one end of the first rotating rod 151 is rotatably connected to the first front end 121 of the connector body 12, one end of the second rotating rod 152 is rotatably connected to the second front end 131 of the upper cover 13, and the other end of the first rotating rod 151 is rotatably connected to the other end of the second rotating rod 152.

Further, each group of hinge structure 15 further includes a connecting rod 153, which has one end rotatably connected to the first rear end 122 of the connector body 12, and the other end rotatably connected to the other end of the first rotating rod 151, so that a swing amplitude of the first rotating rod 151 is limited by the connecting rod 153.

Although the specific embodiments of the present disclosure have been described above, those skilled in the art should appreciate that such embodiments are only examples, and the protection scope of the present disclosure is defined by the appended claims.

## Claims

1. An integrated charging device for an electric vehicle, comprising a charging adapter (1), a charging gun head (2), a control box (3) and a power supplying plug (4);
wherein the charging adapter (1), the control box (3) and the charging gun head (2) are electrically connected in sequence to form a wall-mounted charging pile (100), with each connection being a detachable connection; and
the charging gun head (2), the control box (3) and the power supplying plug (4) are electrically connected in sequence to form a charging gun of mode 2 (200), with each connection being a detachable connection;
**characterized in that**
the control box (3) comprises control modules including a first control module configured to control the charging of the wall-mounted charging pile (100) and a second control module configured to control the charging of the charging gun of mode 2 (200);
the control box (3) further comprises a switching device, which is electrically connected to the first control module and the second control module respectively and is configured to identify power parameters of a power grid end,
and activate the first control module or the second control module according to the identified power parameters;
wherein the switching device comprises:
an identification module configured to identify the power parameters; and
a switching module configured to control the first control module or the second control module to be electrically connected to the power grid end according to the power parameters identified by the identification module.

2. The integrated charging device for an electric vehicle according to claim 1, wherein the charging adapter (1) comprises a first male end (11), the control box (3) comprises a utility female end (31) and a gun connecting female end (32), the charging gun head (2) comprises a second male end (21), and the power supplying plug (4) comprises a third male end (41); and
the control box (3) is plugged with the second male end (21) through the gun connecting female end (32), and the control box (3) is plugged with the first male end (11) or the third male end (41) through the utility female end (31).

3. The integrated charging device for an electric vehicle according to claim 2, wherein the charging gun head (2) comprises a gun head body (22) and a first cable (23);
the gun head body (22), the first cable (23) and the second male end (21) are fixedly connected in sequence;
the power supplying plug (4) comprises a power source plug (42) and a second cable (43); and
the power source plug (42), the second cable (43) and the third male end (41) are fixedly connected in sequence.

4. The integrated charging device for an electric vehicle according to claim 2, wherein the charging adapter (1) comprises a connector body (12) and an upper cover (13), the connector body (12) is provided with an accommodating groove (14) for accommodating the control box (3), the first male end (11) is fixed on the connector body (12) and adjacent to the accommodating groove (14), and the upper cover (13) is capable of shielding the accommodating groove (14) by covering over the connector body (12).

5. The integrated charging device for an electric vehicle according to claim 4, wherein the connector body (12) and the upper cover (13) are rotatably connected to each other, so as to be relatively opened or closed by relative rotation.

6. The integrated charging device for an electric vehicle according to claim 5, wherein the connector body (12) comprises a first front end (121) and a first rear end (122), the upper cover (13) comprises a second front end (131) and a second rear end (132), the second rear end (132) of the upper cover (13) is rotatably connected to the first rear end (122) of the connector body (12), the second front end (131) of the upper cover (13) is rotatably connected to the first front end (121) of the connector body (12) through a power-assisting hinge, and the second front end (131) of the upper cover (13) and the first front end (121) of the connector body (121) are moved towards or away from each other by rotation of the power-assisting hinge; and
a plugging force for plugging the utility female end (31) of the control box (3) to the first male end (11) is transmitted to the power-assisting hinge via the connector body (12), to drive the power-assisting hinge to be rotated and cause the connector body (12) to be moved towards the upper cover (13).

7. The integrated charging device for an electric vehicle according to claim 6, wherein the power-assisting hinge comprises two groups of hinge structures (15), which are located at two opposite sides of the receiving groove (14), respectively; and
each group of hinge structure (15) comprises a first rotating rod (151) and a second rotating rod (152), one end of the first rotating rod (151) is rotatably connected to the connector body (12), one end of the second rotating rod (152) is rotatably connected to the upper cover (13), and the other end of the first rotating rod (151) is rotatably connected to the other end of the second rotating rod (152).

8. The integrated charging device for an electric vehicle according to claim 1, wherein the switching device is a circuit board.

## Patentansprüche

1. Integrierte Ladevorrichtung für ein Elektrofahrzeug, umfassend einen Ladeadapter (1), einen Ladepistolenkopf (2), eine Steuerbox (3) und einen Stromversorgungsstecker (4);
wobei der Ladeadapter (1), die Steuerbox (3) und der Ladepistolenkopf (2) elektrisch in Reihe geschaltet sind, um eine wandmontierte Ladesäule (100) zu bilden, wobei jede Verbindung eine lösbare Verbindung ist; und
der Ladepistolenkopf (2), die Steuerbox (3) und der Stromversorgungsstecker (4) elektrisch in Reihe geschaltet sind, um eine Ladepistole des Modus 2 (200) zu bilden, wobei jede Verbindung eine lösbare Verbindung ist;
**dadurch gekennzeichnet, dass**
die Steuerbox (3) Steuermodule umfasst, einschließlich eines ersten Steuerungsmoduls, das konfiguriert ist, um das Laden der wandmontierten Ladesäule (100) zu steuern, und eines zweiten Steuermoduls, das konfiguriert ist, um das Laden der Ladepistole des Modus 2 (200) zu steuern;
die Steuerbox (3) weiter eine Schaltvorrichtung umfasst, die elektrisch mit dem ersten bzw.
dem zweiten Steuerungsmodul verbunden ist und konfiguriert ist, um Leistungsparameter eines Stromnetzendes zu identifizieren,
und das erste oder das zweite Steuerungsmodul gemäß den identifizierten Leistungsparametern zu aktivieren;
wobei die Schaltvorrichtung umfasst:
ein Identifikationsmodul, das konfiguriert ist, um die Leistungsparameter zu identifizieren; und
ein Schaltmodul, das konfiguriert ist, um das erste Steuerungsmodul oder das zweite Steuerungsmodul zu steuern, sodass diese gemäß den vom Identifikationsmodul ermittelten Leistungsparametern elektrisch mit dem Stromnetzende verbunden werden.

2. Integrierte Ladevorrichtung für ein Elektrofahrzeug nach Anspruch 1, wobei der Ladeadapter (1) ein erstes Steckerende (11) umfasst, die Steuerbox (3) ein Versorgungsbuchsenende (31) und ein Pistolenanschlussbuchsenende (32) umfasst, der Ladepistolenkopf (2) ein zweites Steckerende (21) umfasst und der Stromversorgungsstecker (4) ein drittes Steckerende (41) umfasst; und
die Steuerbox (3) mit dem zweiten Steckerende (21) über das Pistolenanschlussbuchsenende (32) zusammengesteckt ist und die Steuerbox (3) mit dem ersten Steckerende (11) oder dem dritten Steckerende (41) über das Versorgungsbuchsenende (31) zusammengesteckt ist.

3. Integrierte Ladevorrichtung für ein Elektrofahrzeug nach Anspruch 2, wobei der Ladepistolenkopf (2) einen Pistolenkopfkörper (22) und ein erstes Kabel (23) umfasst;
der Pistolenkopfkörper (22), das erste Kabel (23) und das zweite Steckerende (21) fest in Reihe geschaltet sind;
der Stromversorgungsstecker (4) einen Leistungsquellenstecker (42) und ein zweites Kabel (43) umfasst; und
der Leistungsquellenstecker (42), das zweite Kabel (43) und das dritte Steckerende (41) fest in Reihe geschaltet sind.

4. Integrierte Ladevorrichtung für ein Elektrofahrzeug nach Anspruch 2, wobei der Ladeadapter (1) einen Verbinderkörper (12) und eine obere Abdeckung (13) umfasst, der Verbinderkörper (12) mit einer Aufnahmenut (14) zur Aufnahme der Steuerbox (3) versehen ist, das erste Steckerende (11) auf dem Verbinderkörper (12) und angrenzend an die Aufnahmenut (14) befestigt ist, und die obere Abdeckung (13) in der Lage ist, die Aufnahmenut (14) abzuschirmen, indem sie den Verbinderkörper (12) abdeckt.

5. Integrierte Ladevorrichtung für ein Elektrofahrzeug nach Anspruch 4, wobei der Verbinderkörper (12) und die obere Abdeckung (13) drehbar miteinander verbunden sind, sodass sie durch eine relative Drehung relativ geöffnet oder geschlossen werden können.

6. Integrierte Ladevorrichtung für ein Elektrofahrzeug nach Anspruch 5, wobei der Verbinderkörper (12) ein erstes vorderes Ende (121) und ein erstes hinteres Ende (122) umfasst, die obere Abdeckung (13) ein zweites vorderes Ende (131) und ein zweites hinteres Ende (132) umfasst, das zweite hintere Ende (132) der oberen Abdeckung (13) drehbar mit dem ersten hinteren Ende (122) des Verbinderkörpers (12) verbunden ist, das zweite vordere Ende (131) der oberen Abdeckung (13) über ein kraftunterstütztes Scharnier drehbar mit dem ersten vorderen Ende (121) des Verbinderkörpers (12) verbunden ist, und das zweite vordere Ende (131) der oberen Abdeckung (13) und das erste vordere Ende (121) des Verbinderkörpers (121) durch Drehung des kraftunterstützenden Scharniers aufeinander oder voneinander weg bewegt zu werden; und
eine Steckkraft zum Zusammenstecken des Versorgungsbuchsenendes (31) der Steuerbox (3) mit dem ersten Steckerende (11) über den Verbinderkörper (12) auf das kraftunterstützende Scharnier übertragen wird, um das kraftunterstützende Scharnier in Drehung zu versetzen und eine Bewegung des Verbinderkörpers (12) in Richtung der oberen Abdeckung (13) zu bewirken.

7. Integrierte Ladevorrichtung für ein Elektrofahrzeug nach Anspruch 6, wobei das kraftunterstützende Scharnier zwei Gruppen von Scharnierstrukturen (15) umfasst, die sich jeweils an zwei gegenüberliegenden Seiten der Aufnahmenut (14) befinden; und
jede Gruppe der Scharnierstruktur (15) eine erste Drehstange (151) und eine zweite Drehstange (152) umfasst, wobei ein Ende der ersten Drehstange (151) drehbar mit dem Verbinderkörper (12) verbunden ist, ein Ende der zweiten Drehstange (152) drehbar mit der oberen Abdeckung (13) verbunden ist und das andere Ende der ersten Drehstange (151) drehbar mit dem anderen Ende der zweiten Drehstange (152) verbunden ist.

8. Integrierte Ladevorrichtung für ein Elektrofahrzeug nach Anspruch 1, wobei die Schaltvorrichtung eine Leiterplatte ist.

## Revendications

1. Dispositif de charge intégré pour véhicule électrique, comprenant un adaptateur de charge (1), une tête de pistolet de charge (2), un boîtier de commande (3) et une prise d'alimentation (4) ;
dans lequel l'adaptateur de charge (1), le boîtier de commande (3) et la tête de pistolet de charge (2) sont électriquement connectés en séquence pour former une pile de charge murale (100), chaque connexion étant une connexion détachable ; et
la tête de pistolet de charge (2), le boîtier de commande (3) et la prise d'alimentation (4) sont électriquement connectés en séquence pour former un pistolet de charge de mode 2 (200), chaque connexion étant une connexion détachable ;
**caractérisé en ce que**
le boîtier de commande (3) comprend des modules de commande incluant un premier module de commande configuré pour commander la charge de la pile de charge murale (100) et un second module de commande configuré pour commander la charge du pistolet de charge de mode 2 (200) ;
le boîtier de commande (3) comprend en outre un dispositif de commutation qui est électriquement connecté au premier module de commande et au second module de commande respectivement et est configuré pour identifier les paramètres de puissance d'une extrémité du réseau électrique,
et activer le premier module de commande ou le second module de commande en fonction des paramètres de puissance identifiés ;
dans lequel le dispositif de commutation comprend :
un module d'identification configuré pour identifier les paramètres de puissance ; et
un module de commutation configuré pour amener le premier module de commande ou le second module de commande à se connecter électriquement à l'extrémité du réseau électrique en fonction des paramètres de puissance identifiés par le module d'identification.

2. Dispositif de charge intégré pour véhicule électrique selon la revendication 1, dans lequel l'adaptateur de charge (1) comprend une première extrémité mâle (11), le boîtier de commande (3) comprend une extrémité femelle de service public (31) et une extrémité femelle de connexion pour pistolet (32), la tête de pistolet de charge (2) comprend une deuxième extrémité mâle (21) et la prise d'alimentation (4) comprend une troisième extrémité mâle (41) ; et
le boîtier de commande (3) est branché avec la deuxième extrémité mâle (21) à travers l'extrémité femelle de connexion pour pistolet (32), et le boîtier de commande (3) est branché avec la première extrémité mâle (11) ou la troisième extrémité mâle (41) à travers l'extrémité femelle de service public (31).

3. Dispositif de charge intégré pour véhicule électrique selon la revendication 2, dans lequel la tête de pistolet de charge (2) comprend un corps de tête de pistolet (22) et un premier câble (23) ;
le corps de tête de pistolet (22), le premier câble (23) et la deuxième extrémité mâle (21) sont connectés de manière fixe en séquence ;
la prise d'alimentation (4) comprend une prise de source d'énergie (42) et un second câble (43) ; et
la prise de source d'énergie (42), le second câble (43) et la troisième extrémité mâle (41) sont connectés de manière fixe en séquence.

4. Dispositif de charge intégré pour véhicule électrique selon la revendication 2, dans lequel l'adaptateur de charge (1) comprend un corps de connecteur (12) et un couvercle supérieur (13), le corps de connecteur (12) est doté d'une rainure d'accueil (14) pour accueillir le boîtier de commande (3), la première extrémité mâle (11) est fixée sur le corps de connecteur (12) et adjacente à la rainure d'accueil (14), et le couvercle supérieur (13) est capable de protéger la rainure d'accueil (14) en recouvrant le corps de connecteur (12).

5. Dispositif de charge intégré pour véhicule électrique selon la revendication 4, dans lequel le corps de connecteur (12) et le couvercle supérieur (13) sont connectés de manière rotative l'un à l'autre de sorte qu'ils soient relativement ouverts ou fermés par rotation relative.

6. Dispositif de charge intégré pour véhicule électrique selon la revendication 5, dans lequel le corps de connecteur (12) comprend une première extrémité avant (121) et une première extrémité arrière (122), le couvercle supérieur (13) comprend une seconde extrémité avant (131) et une seconde extrémité arrière (132), la seconde extrémité arrière (132) du couvercle supérieur (13) est reliée de manière rotative à la première extrémité arrière (122) du corps de connecteur (12), la seconde extrémité avant (131) du couvercle supérieur (13) est reliée de manière rotative à la première extrémité avant (121) du corps de connecteur (12) par une charnière à assistance motorisée, et la seconde extrémité avant (131) du couvercle supérieur (13) et la première extrémité avant (121) du corps de connecteur (121) sont déplacées l'une vers l'autre ou s'éloignent l'une de l'autre par rotation de la charnière à assistance motorisée ; et
une force de branchement pour brancher l'extrémité femelle de service public (31) du boîtier de commande (3) à la première extrémité mâle (11) est transmise à la charnière à assistance motorisée via le corps de connecteur (12) pour entraîner la rotation de la charnière à assistance motorisée et amener le corps de connecteur (12) à se déplacer vers le couvercle supérieur (13).

7. Dispositif de charge intégré pour véhicule électrique selon la revendication 6, dans lequel la charnière à assistance motorisée comprend deux groupes de structures de charnière (15) qui sont situés respectivement sur deux côtés opposés de la rainure de réception (14) ; et
chaque groupe de structure de charnière (15) comprend une première tige rotative (151) et une seconde tige rotative (152), une extrémité de la première tige rotative (151) est reliée de manière rotative au corps de connecteur (12), une extrémité de la seconde tige rotative (152) est reliée de manière rotative au couvercle supérieur (13), et l'autre extrémité de la première tige rotative (151) est reliée de manière rotative à l'autre extrémité de la seconde tige rotative (152).

8. Dispositif de charge intégré pour véhicule électrique selon la revendication 1, dans lequel le dispositif de commutation est une carte de circuit imprimé.
